# EUROPEAN PATENT APPLICATION

(11) **EP 1 315 106 A1**
(43) Date of publication of application: **28.05.2003**
(21) Application number: 01128020.3
(22) Date of filing: 26.11.2001
(51) Int. Cl.: G06F 17/60

(54) **Software adaptation between two information systems**

(71) Applicant: EDB Gruppen A/S, 8210 Arhus V (DK)
(72) Inventor: Madsen, Thomas Bo, 8520 Lystrup (DK); Hogsted, Lars, 8550 Ryomgard (DK)
(74) Representative: Nielsen, Leif

(57) **Abstract**

The invention is a method for transfer of information, preferably an e-mail, from an information organising computer system, preferably an e-mail organising system, for example Lotus Notes® or Microsoft Outlook®, to a to a data relationship management system, preferably a Siebel® management system.

## Description

The present invention relates to a method for transfer of information, preferably an e-mail, from an information organising computer system, preferably an e-mail organising system, for example Lotus Notes® or Microsoft Outlook®, to a data relationship management system, preferably a Siebel® management system,

### DESCRIPTION OF PRIOR ART

Database management systems are widely used, especially in large enterprises, in order to categorise the variety of data with respect to business relations, for example client and supplier addresses and related information. For such systems, different computer programs are commercially available, for example so called CRM (Costumer Relationsship Management) programs as for example provided by Siebel Systems®, Inc., CA, USA.

Such a database management system may comprise a catalogue of stored clients as a functional group with names, physical addresses, telephone numbers, and e-mail addresses. Furthermore, the database management system may also comprise other functional groups as for example a contact group identifying employees of the enterprise, an opportunity group identifying sales activities, or a project group identifying projects in the enterprise The data management system interrelates elements from these groups. For example, the name of a client may be linked to an employee and a project.

To each element in a functional group, a so called activity may be linked. An activity may for instance be an e-mail that has been received. Such an inbound e-mail may require action, for example an answer. An activity may be assigned to one element in one functional group or to a variety of elements in one or several functional groups.

It is obvious that such a database management system is a useful tool for organising the activities in an enterprise in a logical and highly structured way. However, because of its versatility, such a system is rather complicated to use. Therefore, many employees prefer more simple systems for simple tasks, for example for the organising of electronic mails, in the following called e-mails.

A number of different e-mail management system are commercially available, for example Lotus Notes® or Microsoft Outlook®, which are some of the most widely used e-mail programs.

Once an e-mail has been received by an employee and registered in Microsoft Outlook®, it is possible to move this e-mail to, for example, a Siebel® CRM System as instance Siebel® eBusiness 2000 applications, Siebel® Sales, Siebel® Call Center and Siebel® Service. However, this is a tedious procedure as will become apparent in the following.

Firstly, it requires that the Siebel program is started with an open user interface, a so called window, on the computer display. Inside the Siebel program, the element in a functional group, for example a personal name, to which the e-mail has to be associated, has to be found and actively selected by the user. This selection may be performed by a pointer moving tool, for example a computer mouse equipped with button to be pressed for activation of the selection. The user, now still in the Siebel window, needs to find and activate the attachment menu in the Siebel user interface. After these steps, the user has to activate the Outlook window, place the pointer on the e-mail to be copied to the Siebel program and perform a so called Drag and Drop action, where the pointer is placed on the e-mail identifying element and then during activation dragged across the display to the corresponding position on the Siebel interface. However, this action requires that the Outlook program window and the Siebel program window need to be minimised, which means, that neither window fills the whole computer screen. Furthermore, the Siebel window has to be positioned relatively to the Outlook window such that a proper Drag and Drop operation can be performed, which means that the start position for the movement and the destination are not overlapping.

As can easily be recognised from this description, this operation, though being trivial, is rather tedious and time consuming.

A further severe disadvantage is connected to the e-mail transfer method as just described in that the copied e-mail will only be stored in the Siebel program as an attachment to an activity and will not constitute an activity itself with all its helpful features.

In case that the e-mail should be copied from Lotus Notes® to a Siebel® management program, the work becomes even more tedious, because a Drag and Drop function is not possible. Thus, the e-mail has to be exported from Lotus Notes® to a file system as for example the desktop of the personal computer before a Drag and Drop action can be performed.

### DESCRIPTION OF THE INVENTION

Due to this missing versatility for copying e-mails, it would be desirable to find a method to facilitate this operation for moving e-mails from one program to another program and in particular to facilitate the copying of an e-mail from Microsoft Outlook® or Lotus Notes® to a Siebel® management program.

This purpose is achieved by a method as described in claim 1.

The method according to the invention is preferably used in connection with e-mail programs. However, the method is general and applies for other organised data systems as well, as will be appreciated by a man skilled in the art.

The method according to the invention is in one version an automatic e-mail transfer from an information organising computer system, preferably an e-mail organising system, for example Lotus Notes® or Microsoft Outlook®, to a data relationship management system, preferably a Siebel® management system. In another embodiment, the invention is a transfer program initiated by the user upon call of a macro in the information organising computer system.

The described method is employed in practice as an add-on utility program to existing programs.

In the following, the automatic version will be explained followed by an explanation of the macro initiated method.

### The automatic version

The information concerned, preferably an e-mail, is stored in a data register functionally connected with the information organising computer system, preferably Microsoft Outlook® or Lotus Notes®. The information is associated to an information identifier in the organising computer program This information identifier may for example be the name of the sender of the e-mail.

As mentioned above, the information organising system is the source system for the information to be transferred. The data relationship management system is the destination system for the information. The data relationship management system is organised in functional groups, preferably a contact group, an account group, an opportunity group, and a project group, as it is known for Siebel systems. Each group has elements with element identifiers to which activities may be associated. Activities may be of different types, for example an e-mail type.

In order to ensure a proper transfer from a source to a destination, a source identifier, for example a first user name, and a destination identifier, for example a second user name, are predetermined. Thus, it is ensured that information from the source system associated to a first user or a first user group is transferred to the destination system associated to either the same user or a different user, or different group of users.

For the transfer, initially, a connection is established to the data interface for the information organising system and information associated with the source identifier, is loaded from the data register. Information is extracted associated with the information identifier, for example an e-mail from a certain e-mail sender. A connection to the data interface for the data relationship management system is established as well, and management data from the relationship management system are loaded. It is assured that these data indeed are associated with the predetermined destination identifier, that is to say associated to the receiving user. In case that the information identifier, for example name of the e-mail sender, is equal to the element identifier, for example a name for en element in a group in the relationship management system, the information, for example the e-mail, is copied as an activity to the element in the relationship management system.

This way, the problems as described in the introductory part are overcome. In the case of an e-mail organising program, the user may still use this program, for example Microsoft Outlook®, as his favourite e-mail program, but each e-mail that should be organised in the relationship management program will also be stored there. The transfer may be initiated by starting a routine, for example by the user himself at a chosen point of time, after which each incoming e-mail is transferred automatically until the routine is stopped. However, preferably, the method according to the invention is initiated automatically without control by the user. This is especially of interest, when information, as e-mails, are received regularly during the day and the night without user control. In this case, the user always experiences an updated information status in the relationship management system.

### The macro version

The information concerned, preferably an e-mail, is stored in a data register functionally connected with the information organising computer system, preferably Microsoft Outlook® or Lotus Notes®. The information is associated to an information identifier in the organising computer program. This information identifier may for example be the name of the sender of the e-mail. The information organising system has an activatable user interface on a display for displaying the information in an ordered manner. In case of Microsoft Outlook®, this may be a list of received e-mails.

It is assumes that the user interface system has a tool bar for activation of pre-programmed macro functions with a corresponding macro identifier list. The data in the data relationship management system are organised in functional groups, preferably a contact group, an account group, an opportunity group, and a project group. Each group has elements with element identifiers and to these elements, activities may be associated. Such an activities may, for example be of an e-mail type.

In order to ensure a proper transfer from a source to a destination, a source identifier, for example a first user name, and a destination identifier, for example a second user name, is predetermined. Thus, it is ensured that information from the source system associated to a first user or a first user group is transferred to the destination system associated to either the same user or a different user, or different group of users.

In the list of macros in the information organising computer system, a new macro identifier is added to the macro identifier list by conventional programming techniques. When the user interface is activated, this macro may be activated by the user for information transfer. For this macro to initiate the information transfer, the information to be transferred must be indicated. This may be done by indicating, for example by a mouse click on the information identifier, for example the name of the e-mail sender together with the associated e-mail. In an e-mail program, this indication may be linked to a highlighting of this e-mail in the e-mail list, a function which is well known. Upon call of the macro, the information associated with the indicated information identifier is extracted from the database, or alternatively if stored locally; from the local memory. After establishment of a connection to the data interface for the data relationship management system, data from the relationship management system are loaded. It is assured, that the loaded data indeed are associated with the destination identifier.

In case that the information identifier, for example the e-mail sender, is equal to the element identifier, which means that the e-mail sender also is registered in the relationship management system as an element, the information is copied as an activity to this element.

This procedure for the user is very simple and implies only an indication of the sender of the e-mail, together with the associated e-mail, and running the macro, which is done by a mouse click on the corresponding macro in the macro list.

If the information, for example an e-mail, comprises data attachments, the method further comprises copying the attachments to the the activity of the element together with the information.

In a further embodiment, in case that the information identifier is not identical to any element identifier in the relationship management system, a dialogue window is displayed on the computer screen with a question addressed to the user, asking for input on which element the information is intended to be copied to as an activity in the relationship management system.

Alternatively, in case that the information identifier, for example the name of the e-mail sender, is not identical to any element identifier in the relationship management system, in a further embodiment of the invention, a group element is created in the relationship management system with an element identifier corresponding to the information identifier. The information is then copied as an activity associated with this new element.

### SHORT DESCRIPTION OF THE DRAWINGS

The invention will be explained in more detail with reference to the drawings, where
FIG. 1 is a flow diagram for the activation sequence,
FIG. 2 is a flow diagram for the main program startup procedure,
FIG. 3 is a flow diagram for the macro routine for the mail program.

### DETAILED DESCRIPTION OF THE INVENTION

The invention will in the following be described in the case that the information organising computer system is identical to the well known and widely used e-mail organiser Microsoft Outlook® or Lotus Notes® in the following for simplicity denoted Outlook/Notes. The relationship management system according to the invention is a commercially available Siebel business relationship management program, also comprising Siebel® eBusiness 2000 applications, Siebel® Sales, Siebel® Call Center and Siebel® Service.

The method of the invention is accomplished by running on a computer a program that connects between the two systems, Outlook/Notes and Siebel®. The computer program may, as explained in the following, consists of two object oriented programmed modules, in the following called EGConnector and EGSiebelMail, which for example are implemented as files directly executable in a computer system with a Microsoft Windows user platform.

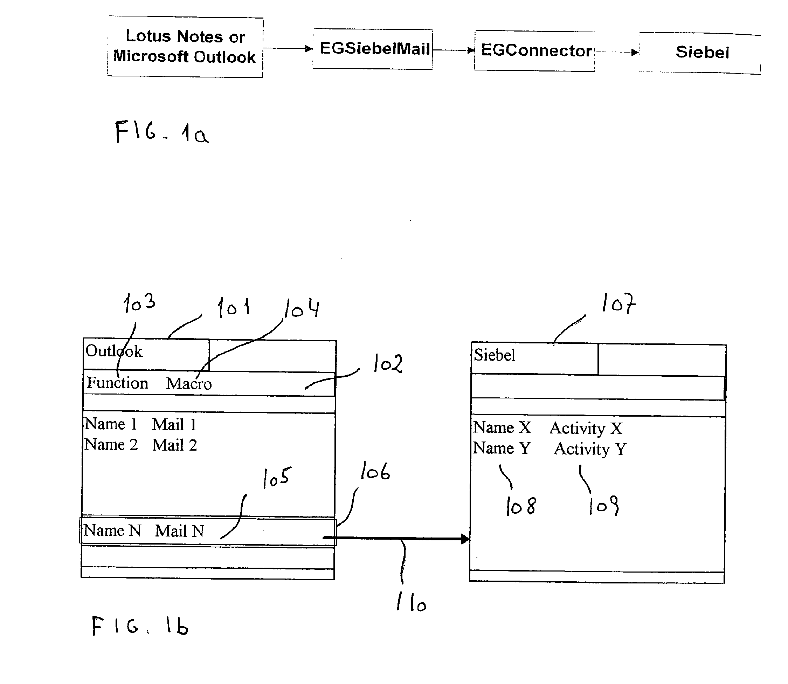

FIG. 1a is a simple diagram showing the activation sequence with the two modules between the information organising computer system Lotus Notes or Microsoft Outlook and the information organising computer system from Siebel. In the following the design and data flow in the two modules is described.

The modules may be accomplished as standalone COM objects (Common Object Model). This allows both modules to run on the personal computer (PC) regardless of the applications that invoke their COM interfaces. The chain of activation is shown in FIG. 1a.

The sequence is shown schematically in FIG. 1b. From the (left) Outlook window 101 having a bar 102 with functions 103 or macros 104 that may be activated, a mail 105 with *Name N* and associated data *Mail N* has been highlighted 106 and is getting transferred to the Siebel program. The Siebel user interface 107 comprises a list of names 108 and associated activities 109. The highlighted e-mail 105 from the Outlook program is copied 110 as a new activity element in the Siebel program.

Initiated may the transfer of mails be through activation of a macro 104 as shown in the upper bar 102 of the Outlook window.

The idea of having two separate modules is a result of an analysis of the benefits and possible problems by linking Siebel to an e-mail program The advantage of choosing the COM standard and standalone programs as the way to link Siebel to Outlook/Notes is that the applications in this case are reasonably isolated from each other, they can be started automatically when needed and there are no direct linkage and memory sharing except when the methods of the COM object are invoked. Furthermore, it is easy to upgrade and enhance the application and finally, it reduces the need for scripting or programming in the hosting mail applications. This makes installation and compatibility issues easier to solve.

Initially, Outlook/Notes is started An automatic macro in the mail program loads the module EGSiebelMail, which as one of the first tasks loads module EGConnector and reads information from Siebel to fill the combo boxes in the user interface (user interface). The EGSiebelMail application then goes idle and waits for a call from the mail program.

When a user wants to transfer mails from Outlook/Notes to Siebel, the user selects the mails by pointer interaction, for example a mouse-click operation, and activates then the "Send to Siebel" menu entry in the Outlook/Notes user Interface by a further pointer interaction. On the Outlook/Notes user interface, the selected mails typically appear highlighted. The mail program Outlook/Notes then feeds into a buffer connected with EGSiebelMail information from the selected highlighted mails. The mail program will furthermore save any attachments to the mails and give the corresponding directory path for the saved attachment-files to EGSiebelMail. Finally, the mail program will call the program internal Show routine to have the user interface from EGSiebelMail to pop-up.

The user now has to select where to create the activities in Siebel. This can be Contacts, Accounts, Opportunities or Projects or other possible objects The name of the Accounts/Contacts etc have already been loaded into EGSiebelMail, so the user just selects from the combo boxes in the user interface and presses "Send to Siebel"

The mails are now processed by EGSiebelMail and for each mail in the buffer; EGSiebelMail creates an activity. Attachments from the original e-mails are saved in the Siebel file system and marked as attachments to the newly created Activities. When EGSiebelMail has processed all mails, the user interface is hidden and the application returns to an idle state.

When an application calls for the COM object called EGSiebelMail.Application - which is exactly what happens when Outlook/Notes is starting - the EGSiebelMail application is started.

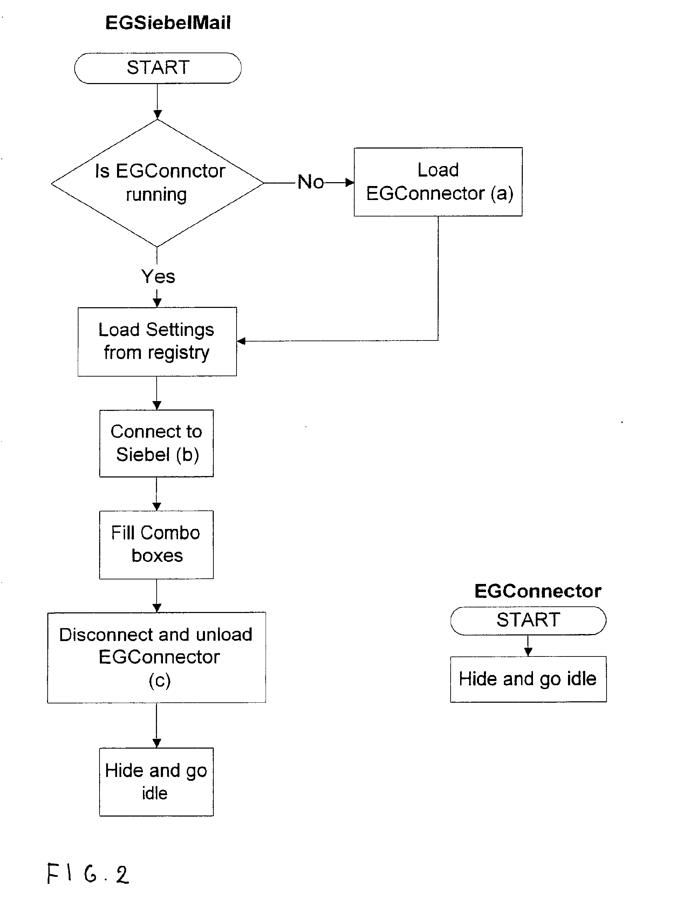

In FIG. 2, a flow diagram illustrates the actions when EGSiebelMail is loaded. First, an instance of EGConnector is created (a) by a call to the ActiveX object.

ActiveX is a set of technologies that enable software components to interact with one another in a networked environment, regardless of the language in which the components were created. An ActiveX control is a user interface element created using ActiveX technology. ActiveX is a set of technologies and services, all based on the Component Object Model (COM) from Microsoft Corporation.

If EGConnector is running, the active instance will be used - otherwise a new instance of the EG Connector program is started.

The EGSiebelMail program needs to be initialised with a set of parameters such as login name, path to Siebel and various other parameters. These settings are loaded from the registry before connecting/starting EGConnector (b). The only purpose of having the EGConnector application is to create the connection to Siebel - which is also illustrated in FIG. 2 - since there are no other functions or steps that have to be activated when EGConnector is started. This is primarily done in order to keep the connection with Siebel open when EGSiebelMail is closed or restarted. In this way, performance can be increased and the response time when invoking the application is as small as possible.

After having performed the data transfer, EGConnector is unloaded end the system goes into an idle state.

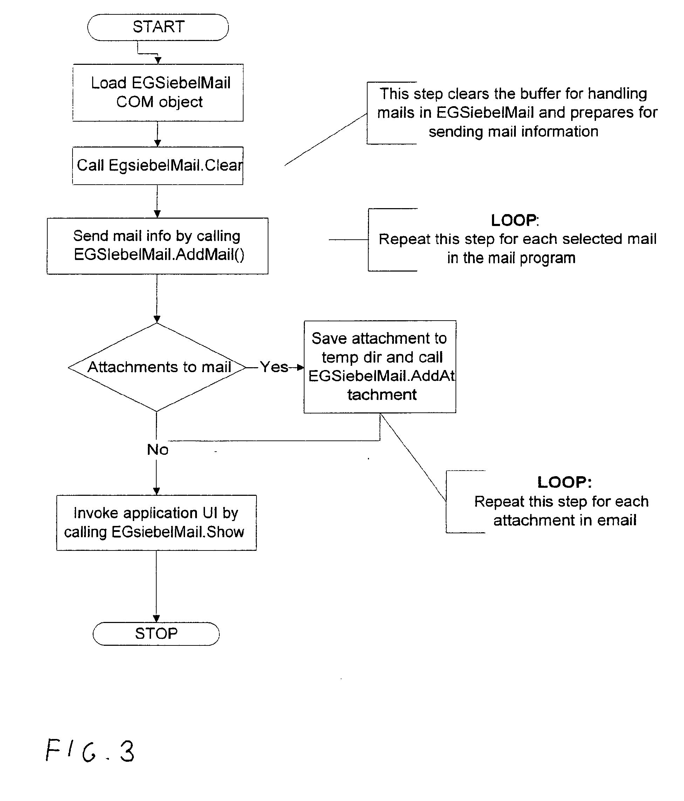

For the transfer of mails from the Outlook/Notes program to the Siebel program, the user initially selects one or more mails in the mail program by a pointer action as described above. Then a macro called "SendToSiebel" is called. The logic and call-sequence of this macro as used in the mail program that connects to EGSiebelMail is illustrated in the flow diagram of Fig. 3. After having loaded the EGSiebelMail. Clear clears the buffer for handling the data transfer in connection with mails. Mails to be transferred are then added by the EGSiebelMail.AddMail routine. Each mail is checked for possible attachments that are added to the data transfer buffer (temp dir) before transmission.

The invention as explained in the foregoing gives the user an easy and stable way to access and use data from his CRM system without leaving his/hers mail-tool. For this goal to be achieved, we in practice utilise the open COM standards employed by as well Siebel as Microsoft Outlook and Lotus Notes.

As explained in the following, the method according to the invention is a routine that facilitates the handling of especially e-mails between computer programs in order to save time and effort of users. As may be acknowledged by a man skilled in the art, the invention is not limited to the Microsoft Outlook®, Lotus Notes®, or a Siebel® application, though the invention is preferably used in connection with these programs.

## Claims

1. Method for transfer of information, preferably an e-mail, from an information organising computer system, preferably an e-mail organising system, for example Lotus Notes® or Microsoft Outlook®, to a customer relationship management system, preferably a Siebel® system,
- said information being stored in a data register functionally connected with said information organising computer system,
- said information being associated to an information identifier, preferably a name, in said organising computer program
- data in said customer relationship management system being organised in functional groups, preferably a contact group, an account group, an opportunity group, and a project group, each group having elements, each of said elements having an element identifier to which activities may be associated, said activities being of a type, for example an e-mail type, said method comprising
- predetermining a source identifier, for example a first user name, and a destination identifier, for example a second user name, said source identifier and said destination identifier being optionally identical,
- establishing a connection to the data interface for said information organising system,
- loading information from said data register, said information being associated with said source identifier,
- extracting information associated with said information identifier,
- establishing a connection to the data interface for said data relationship management system,
- loading management data from said relationship management system, said data being associated with said destination identifier,
- in case that said information identifier corresponds to said element identifier, copying said information associated to said information identifier as an activity to said element in said customer relationship management system.

2. Method according to claim 1, **characterised in that** said information organising system is configured to be activated when information with an information identifier is received for said source identifier from a network, for example the Internet, upon which said information is stored in said data register, and that said method is automatically initiated upon receipt of such an information from a network.

3. Method for transfer of information, preferably an e-mail, from an information organising computer system, preferably an e-mail organising system, for example Lotus Notes or Microsoft Outlook, to a customer relationship management system, preferably a Siebel system,
- said information being stored in a data register functionally connected with said information organising computer system,
- said information being associated to an information identifier, preferably a name, in said organising computer program,
- said information organising system having an activatable user interface on a display for displaying said information in an ordered manner,
- said user interface having a tool bar for activation of pre-programmed macro functions with a corresponding macro identifier list,
- data in said customer relationship management system being organised in functional groups, preferably a contact group, an account group, an opportunity group, and a project group, each group having elements, each of said elements having an element identifier to which activities may be associated, said activities being of a type, for example an e-mail type, said method comprising
- predetermining a source identifier, for example a first user name, and a destination identifier, for example a second user name, said source identifier and said destination identifier being optionally identical,
- receiving a new macro identifier and adding said new macro identifier to said macro identifier list,
- activating said user interface,
- receiving indication for moving information associated to an information identifier, and upon call of that macro,
- extracting said information associated with said information identifier from said database,
- establishing a connection to the data interface for said data relationship management system,
- loading management data from said customer relationship management system, said data being associated with said destination identifier,
- in case that said information identifier corresponds to an element identifier, copying said information associated to said information identifier as an activity to said element in said relationship management system.

4. Method according to any one of the claims 1-3, **characterised in that** if said information comprises data attachments, said method further comprises copying said attachments to said activity of said element together with said information.

5. Method according to claim 3 or 4, **characterised in that** said indication being a pointer activation, preferably a mouse pointer activated by a mouse click

6. Method according to any one of the claims claim 3-5, **characterised in that** in case that said information identifier is not identical to any element identifier in said relationship management system, a dialogue window is displayed in said display with a question addressed to the user, concerning which element said information is intended to be copied to as an activity.

7. Method according to any one of the claims claim 3 - 6, **characterised in that** in case that said information identifier is not identical to any element identifier in said relationship management system, a group element is created in said relationship management system with an element identifier corresponding to said information identifier and said information is copied as an activity associated with this element.

8. Method according to any one of the preceding claims, **characterised in that** said method involves computer program routines programmed in an object oriented programming language.

9. Method according to claim 8, **characterised in that** said routines are standalone Common Object Model programs.

10. Computer program comprising program code performing the method according to any one of the claims 1 - 9 when said program is run on a computer.

11. Computer program according to claim 10, **characterised in that** said computer program is programmed in an object oriented programming language

12. Computer program product comprising program code means stored on a computer readable medium for performing the method according to any one of the claims 1 - 9 when said computer program product is run on a computer.
